# EUROPÄISCHE PATENTSCHRIFT

(11) **EP 2 646 947 B1**
(45) Veröffentlichungstag und Bekanntmachung des Hinweises auf die Patenterteilung: **05.09.2018**
(21) Anmeldenummer: 13702333.9
(22) Anmeldetag: 21.01.2013
(51) Int. Cl.: G01S 7/41, G06K 7/10, G01S 13/75, G06K 17/00

(54) **VERFAHREN UND VORRICHTUNG ZUM IDENTIFIZIEREN EINES ZUGRIFFS AUF FÄCHER EINES LAGERSYSTEMS**
METHOD AND DEVICE FOR IDENTIFYING AN ACCESS TO COMPARTMENTS OF A STORAGE SYSTEM
PROCÉDÉ ET DISPOSITIF D'IDENTIFICATION D'UN ACCÈS À DES CASIERS D'UN SYSTÈME D'ENTREPOSAGE

(30) Priorität: 30.01.2012 DE 102012100731
(43) Veröffentlichungstag der Anmeldung: 09.10.2013
(60) Teilanmeldung: 14192064.5
(73) Patentinhaber: Technische Universität München, 80333 München (DE)
(72) Erfinder: FISCHER, Roland, 91233 Kersbach (DE); GÜNTHNER, Willibald, 85591 Vaterstetten (DE); SALFER, Michael, 8112 Eisbach (AT); WÖLFLE, Michael, 82299 Türkenfeld (DE); MIRLACH, Michael, 81249 München (DE)
(74) Vertreter: Lucke, Andreas
(86) Internationale Anmeldenummer: PCT/EP2013/000175
(87) Internationale Veröffentlichungsnummer: WO 2013/113476

(56) Entgegenhaltungen:
- EP-A1- 2 169 593
- DE-A1-102004 041 491
- US-A1- 2006 284 727

## Beschreibung

### Gebiet der Erfindung

Die Erfindung bezieht sich auf ein Verfahren und eine Vorrichtung zum Identifizieren eines Zugriffs auf Fächer eines Lagersystems bei der manuellen Kommissionierung unter Verwendung eines RFID-Systems.

### Hintergrund und Stand der Technik

Lagerarbeit ist trotz eines hohen Mechanisierungs- und Automatisierungsgrades noch immer mit einem hohen Anteil manueller Tätigkeit verbunden. Dies gilt insbesondere für die Prozesse der Kommissionierung/Auftragszusammenstellung im Rahmen der Intralogistik sowie der Distributionslogistik, welche für bis zu 50% der Lagerkosten verantwortlich sind. Darüber hinaus hat die Kommissionierung eine direkte Auswirkung auf den Servicegrad der Logistik.

Bei der Kommissionierung hat ein Kommissionierer die Aufgabe, entsprechend einem Kommissionierauftrag vorgegebene Artikel aus einem Lager mit einer Vielzahl von Fächern oder Behältern zu entnehmen oder in solche Fächer einzuordnen. Dabei kommt es in der Praxis immer wieder vor, dass aus einem Fach die falschen Artikel entnommen werden oder in das Fach die falschen Artikel einsortiert werden. Die Entnahme falscher Artikel aus dem Lager bzw. eine falsche Bestückung des Lagers führt zu großen Zeitverlusten und, sofern sie nicht bemerkt wird, zu Qualitätseinbußen bei der Lieferung. Die Nichtverfügbarkeit der richtigen Artikel kann im produzierenden Gewerbe schnell zu Produktionsverzögerungen oder Produktionsausfällen führen, welche mit erheblichen Kosten verbunden sind.

Zur Vermeidung von Zugriffsfehlern werden oft Vorgabesysteme eingesetzt, welche dem Kommissionierer anzeigen, aus welchem Lagerort er entnehmen soll oder welches Lagerfach er beschicken soll. Dazu gehören beispielsweise Pick-by-Voice-Systeme oder Pick-to-Light-Systeme. Darüber hinaus wurden Kontrollmechanismen entwickelt, um zu überprüfen, ob der Kommissionierer den Vorgaben folgt. Solche Systeme lassen sich grob in vier Klassen einteilen: (1) manuelle Bestätigung der richtigen Entnahme-/Abgabeorte; (2) technisch unterstützte Bestätigung der richtigen Entnahme-/Abgabeorte; (3) direktes Überprüfen der entnommenen/einsortierten Artikel; und (4) automatische Erfassung der Entnahme-/Abgabeorte.

Bei der manuellen Bestätigung obliegt die Kontrolle allein dem Kommissionierer selbst, welcher beim Entnehmen/Einsortieren seine Kommissionierliste abgleicht und abzeichnet. Es erfolgt keine gesonderte Überprüfung der richtigen Ausführung.

Bei der technisch unterstützten Bestätigung gemäß der zweiten Klasse erfolgt eine Kontrolle des richtigen Zugriffs durch Eingabe von Prüfziffern mittels einer Tastatur, Vorlesen von Prüfziffern in ein Mikrofon, Scannen von Barcodes oder Betätigen von Quittiereinrichtungen an Lagerfächern. Gemein ist allen Systemen dieser Klasse ein dem Greifvorgang nachgelagerter Prozessschritt zur Bestätigung bzw. Kontrolle. Ein solcher Prozessschritt kostet Zeit und verursacht dadurch zusätzliche Prozesskosten. Zudem kann der Kontrollschritt selbst wiederum fehlerbehaftet sein. Beispielsweise kann der Kommissionierer irrtümlich in das falsche Fach des Lagers greifen, jedoch im nachgelagerten Kontrollschritt das richtige Fach bestätigen.

Die Verlässlichkeit der Kontrolle lässt sich mit den Systemen der dritten Klasse steigern, bei denen die entnommenen bzw. einsortierten Artikel direkt überprüft werden, beispielsweise durch einen Barcodescan am Artikel. Dadurch lassen sich Fehler wirksam vermeiden. Diese Verfahren sind jedoch sehr zeitaufwändig, dadurch kostenintensiv und daher nur in wenigen Fällen wirtschaftlich zu betreiben.

Als vorteilhaft haben sich in der Praxis die Systeme der vierten Klasse erwiesen, welche parallel zum Entnahme-/Abgabevorgang der Kommissionierung automatisch dessen Korrektheit überprüfen, ohne jedoch jeden einzelnen Artikel zu überprüfen. Die Überprüfung bleibt vorzugsweise vom Kommissionierer völlig unbemerkt. Eine Rückmeldung erfolgt nur, wenn der Kommissionierer einen Fehler macht. Dadurch lässt sich die Prozesszeit im Vergleich zur zweiten und dritten Klasse entscheidend reduzieren. Vorbekannte Lösungen umfassen beispielsweise Lager, welche mit Berührungssensoren im Lagerfach oder mit einem Laservorhang ausgestattet sind, um einen Griff des Kommissionierers in das Lagerfach zu erkennen. Nachteilig an diesen Lösungen sind allerdings die hohen Investitionskosten und der Montageaufwand, da die Sensoren in jedem Lagerfach bzw. an jedem Regalabschnitt angebracht werden müssen. Zudem können solche Systeme nicht feststellen, welcher Kommissionierer den Sensor ausgelöst hat, so dass sich mehrere Kommissionierer nur mit zusätzlichem Aufwand unterscheiden lassen.

Ein System zur automatischen Erfassung des Entnahme- und Abgabeortes, welches diese Nachteile vermeidet, ist in der Offenlegungsschrift DE 10 2004 041 491 A1 beschrieben. Bei diesem System ist jedes der Lagerfächer mit einem RFID-Transponder ausgerüstet. Der Kommissionierer trägt an seinem Handgelenk ein RFID-Lesegerät, welches bei einem Griff des Kommissionierers in ein Lagerfach den zugeordneten RFID-Transponder und somit das Lagerfach identifiziert. Das RFID-Lesegerät kommuniziert über einen zweiten Übertragungsstandard mit einer Datenbank, welche den Zugriff auf die Fächer des Lagersystems mit der Kommissionierliste abgleicht. Ein entsprechend der Kommissionierliste erfolgter Zugriff auf ein Fach des Lagersystems kann durch ein akustisches, optisches oder haptisches Signal bestätigt werden. Bei Fehlzugriffen kann der Kommissionierer durch ein davon verschiedenes akustisches, optisches oder haptisches Signal informiert werden.

RFID-Transponder können in großer Zahl kostengünstig hergestellt und an den Regalfächern montiert werden. Auch bestehende Lagersysteme lassen sich mit diesem System einfach nachrüsten. Zudem lassen sich mehrere Kommissionierer unterscheiden, da jeder von ihnen ein eigenes RFID-Lesegerät trägt.

Das in DE'491 vorgestellte System birgt jedoch die Gefahr fehlerhafter Lesungen. Beispielsweise können statt des dem Fach, in welches der Kommissionierer greift, zugeordneten Transponders fälschlicherweise die Transponder der seitlich oder ober- oder unterhalb benachbarten Lagerfächer identifiziert werden. Zur Vermeidung dieser Probleme schlägt die DE'491 vor, die Fachtrennwände des Lagers aus elektrisch abschirmendem Material auszubilden. Dies ist jedoch mit zusätzlichen Kosten verbunden und erschwert die Nachrüstung bestehender Lager. Die DE'491 schlägt auch vor, in Abhängigkeit von den örtlichen Gegebenheiten, insbesondere der Größe der Lagerfächer, die Lesereichweite des RFID-Lesegeräts zu reduzieren. Dies kann Fehlauslesungen, die durch benachbarte Lagerfächer hervorgerufen werden, reduzieren. Dem Kommissionierer werden jedoch möglicherweise Zwangsbewegungen bzw. unnatürliche Bewegungen aufgenötigt, um trotz reduzierter Lesereichweite beim Griff in das Regalfach den Transponder auszulösen. Dadurch entstehen Zeitverluste, welche die Kommissionierkosten erhöhen. Zudem sinkt die Akzeptanz des Systems bei den Kommissionierern.

Ein System und Verfahren zum Bestimmen einer Reihenfolge oder einer Änderung einer Bewegungsrichtung mehrerer RFID-Transponder aus einer Analyse von deren Phasenantwortsignal ist aus der EP 2 169 593 A1 bekannt. Die US 2006/0284727 A1 offenbart ein Verfahren und System zum Bestimmen eines Abstands zwischen einer RFID-Leseeinheit und einer RFID-Transpondereinheit.

Es besteht daher ein Bedarf nach einem verbesserten System zur automatischen Erfassung der Entnahme- bzw. Abgabeorte, welches die vorangehend beschriebenen Nachteile vermeidet und eine zuverlässige Identifizierung des Zugriffs auf Fächer eines Lagersystems ermöglicht.

### Übersicht über die Erfindung

Diese Aufgabe wird einerseits durch die nebengeordneten Verfahrensansprüche 1 und 2 und andererseits durch die nebengeordneten Vorrichtungsansprüche 10 und 11 gelöst. Die abhängigen Ansprüche beziehen sich auf bevorzugte Ausführungsformen.

Die Erfindung bezieht sich gemäß einem ersten Aspekt auf ein Verfahren zum Identifizieren eines Zugriffs auf Fächer eines Lagersystems, denen jeweils RFID-Transpondereinheiten zugeordnet sind, mit den Schritten des Aussendens eines elektromagnetischen Signals mittels einer tragbaren RFID-Leseeinheit, des Erfassens einer Mehrzahl von elektromagnetischen Antwortsignalen, welche jeweils von RFID-Transpondereinheiten in Reaktion auf das ausgesandte Signal erzeugt werden, mittels der RFID-Leseeinheit, sowie des Analysierens eines zeitlichen Verlaufs einer Phasenlage der Antwortsignale beim Zugriff auf ein Fach des Lagersystems, um daraus die dem Fach zugeordnete RFID-Transpondereinheit aus der Mehrzahl von RFID-Transpondereinheiten zu identifizieren.

Der Erfindung liegt die Erkenntnis zugrunde, dass sich durch Analysieren des zeitlichen Verlaufs der Phasenlage der Antwortsignale, welche jeweils eine dem Transponder und damit dem entsprechenden Lagerfach zugeordnete Kennung umfassen, diejenige Transpondereinheit identifizieren lässt, welche zu dem Fach gehört, auf welches der Kommissionierer tatsächlich zugreift. Fehllesungen werden dadurch vermieden, so dass sich die Zuverlässigkeit des Kommissioniersystems steigern lässt und die Kommissionierkosten sinken.

Ein RFID-System mit RFID-Leseeinheit und RFID-Transpondereinheiten im Sinne der Erfindung kann jedes Identifizierungssystem sein, welches Transpondereinheiten mit Hilfe elektromagnetischer Wellen identifiziert. Eine RFID-Leseeinheit im Sinne der Erfindung kann daher jede Einheit sein, welche dazu eingerichtet ist, elektromagnetische Signale auszusenden und von einer Transpondereinheit umgewandelte bzw. modifizierte Antwortsignale zu erfassen, zu analysieren und daraus die RFID-Transpondereinheit zu identifizieren. Eine RFID-Transpondereinheit im Sinne der Erfindung kann jede Einheit sein, welche dazu eingerichtet ist, elektromagnetische Signale der RFID-Leseeinheit zu erfassen und ihnen eine individuelle Kennung aufzuprägen, so dass die modifizierten Signale als elektromagnetische Antwortsignale von der RFID-Leseeinheit detektiert werden können. Die RFID-Transpondereinheit kann ein passiver RFID-Transponder sein, welcher sich ausschließlich aus den elektromagnetischen Signalen des Abfragegeräts versorgt, oder ein aktiver oder semiaktiver RFID-Transponder mit eigener Energiequelle sein. Verschiedene bekannte RFID-Standards können im Rahmen der Erfindung zum Einsatz kommen. Insbesondere können die RFID-Leseeinheit und die RFID-Transpondereinheiten je nach den Anforderungen des Lagersystems verschiedene Frequenzbereiche und verschiedene Modulationsverfahren verwenden.

Der Zugriff auf ein Fach des Lagersystems im Sinne der Erfindung kann ein Bewegen der RFID-Leseeinheit in das Fach oder in Richtung auf das Fach des Lagersystems umfassen. Greift der Kommissionierer, welcher die RFID-Leseeinheit trägt, auf das Fach des Lagersystems zu, lässt sich aus der Phasenlage der Antwortsignale aus der Mehrzahl von RFID-Transpondereinheiten die entsprechende RFID-Transpondereinheit und damit das Fach identifizieren.

In einer bevorzugten Ausführungsform wird die RFID-Leseeinheit bzw. eine Antenne der RFID-Leseeinheit bei dem Zugriff relativ zu den Fächern des Lagersystems bzw. den RFID-Transpondereinheiten bewegt.

Das Analysieren des zeitlichen Verlaufs der Phasenlage kann insbesondere ein Bestimmen einer Relativbewegung zwischen der RFID-Leseeinheit bzw. einer Antenne der RFID-Leseeinheit und den RFID-Transpondereinheiten umfassen.

Ein RFID-Lesegerät umfasst in der Praxis oft eine Vielzahl von Komponenten, insbesondere eine oder mehrere Antenneneinheiten, eine Verarbeitungseinheit zum Erzeugen der auszusendenden Signale und zum Verarbeiten und Analysieren der empfangenen Signale sowie eine Spannungsversorgungseinheit. Im Sinne der Erfindung kann sich die Bezeichnung RFID-Leseeinheit sowohl auf ein integriertes RFID-Lesegerät mit mehreren oder allen dieser Komponenten oder auch auf einzelne Komponenten, insbesondere auf die Antenneneinheit/Antenneneinheiten zum Aussenden und/oder Empfangen elektromagnetischer RFID-Signale, beziehen.

In einer bevorzugten Ausführungsform umfasst das Verfahren auch den Schritt des Identifizierens des Zugreifens auf das Fach des Lagersystems. Das Zugreifen auf das Fach kann dabei ebenfalls aus der Analyse des zeitlichen Verlaufs der Phasenlage der Antwortsignale identifiziert werden. Dazu kann ein erfasster Phasenverlauf verglichen werden mit einem gespeicherten Phasenverlauf, der einem Zugriff entspricht, und bei hinreichender Übereinstimmung ein Zugriff identifiziert werden.

Der zeitliche Verlauf der Phasenlage bzw. die daraus abgeleitete Relativbewegung zwischen der RFID-Leseeinheit und den RFID-Transpondereinheiten kann mit typischen Bewegungsmustern, wie sie bei einem Zugriff auf ein Fach des Lagersystems auftreten, verglichen werden und auf diese Weise bestimmt werden, ob der Kommissionierer auf ein Fach des Lagersystems zugreift.

In einer Weiterbildung umfasst das Analysieren des zeitlichen Verlaufs der Phasenlage ein Bestimmen eines Abstandes zwischen der RFID-Leseeinheit und den jeweiligen RFID-Transpondereinheiten. Der kleinste Abstand kann dabei derjenigen RFID-Transpondereinheit zugerechnet werden, welche dem Fach entspricht, auf das der Kommissionierer zugreift.

In einer bevorzugten Ausführungsform umfasst das Analysieren des zeitlichen Verlaufs der Phasenlage ein Vergleichen der zeitlichen Variation der Phasenlage der Mehrzahl von Antwortsignalen bei dem Zugriff auf das Fach.

Durch Vergleichen der zeitlichen Variation der Phasenlage der Mehrzahl von Antwortsignalen lässt sich diejenige der RFID-Transpondereinheiten bestimmen, auf deren Fach der Kommissionierer zugreift.

Obwohl sich die Muster des zeitlichen Verlaufs der Phasenlage bei der Annäherung des Kommissionierers an das Regal für alle ansprechenden RFID-Transpondereinheiten ähneln können, zeigt diejenige RFID-Transpondereinheit, welche der RFID-Leseeinheit beim Zugriff am nächsten ist und daher dem Fach entspricht, auf welches zugegriffen wird, die ausgeprägteste Variation der Phasenlage.

In einer Ausführungsform gemäß der Erfindung umfasst das Analysieren des zeitlichen Verlaufs der Phasenlage der Mehrzahl der Antwortsignale jeweils ein Bestimmen eines Umkehrpunktes bei dem Zugriff und ein Vergleichen einer Phasendifferenz zwischen dem Umkehrpunkt und einem extremalen Phasenwert.
Der extremale Phasenwert kann ein Minimum oder ein Maximum sein. Diejenige RFID-Transpondereinheit, deren Signal die größte Differenz zwischen dem Phasenwert am Umkehrpunkt und dem extremalen Phasenwert aufweist, kann dem Fach des Lagersystems entsprechen, auf welches zugegriffen wird.
In einer weiteren Ausführungsform der Erfindung umfasst das Analysieren des zeitlichen Verlaufs der Phasenlage der Antwortsignale ein Erfassen eines lokalen Extremums und/oder ein Erfassen einer Krümmung des zeitlichen Verlaufs der Phasenlage.
Das lokale Extremum kann einem Umkehrpunkt beim Zugriff auf das Fach entsprechen. Durch Vergleich der Krümmungen im Bereich des lokalen Extremums lässt sich das Antwortsignal derjenigen RFID-Transpondereinheit bestimmen, welche der RFID-Leseeinheit am nächsten liegt und welche daher demjenigen Fach entspricht, auf welches zugegriffen wird. Beispielsweise kann dies das Antwortsignal sein, welches im Bereich des lokalen Extremums die größte Krümmung aufweist. Das lokale Extremum kann ein Maximum oder ein Minimum sein.
Das Analysieren des zeitlichen Verlaufs der Phasenlage kann ein Approximieren des zeitlichen Verlaufs der Phasenlage, vorzugsweise mittels einer Potenzfunktion, umfassen. Auf diese Weise lässt sich der zeitliche Verlauf der Phasenlage schnell und einfach auswerten und unter den mehreren RFID-Transpondereinheiten vergleichen.
In einer bevorzugten Ausführungsform umfasst das Verfahren auch das Bestimmen einer Höhenposition der RFID-Leseeinheit. Das Bestimmen der Höhenposition umfasst vorzugsweise ein Erfassen eines Luftdrucks. Aus der Höhenposition lassen sich zusätzliche Informationen über dasjenige der Lagerfächer gewinnen, auf welches zugegriffen wird. Beispielsweise lässt sich unter Verwendung der Höheninformation das Lagerfach, auf welches zugegriffen wird, von den benachbarten darunterliegenden oder darüberliegenden Lagerfächern unterscheiden.

In einer bevorzugten Ausführungsform umfasst das Verfahren das Bestimmen einer Raumorientierung der RFID-Leseeinheit. Das Bestimmen der Raumorientierung kann vorzugsweise ein Erfassen eines magnetischen Feldes, insbesondere des Erdmagnetfeldes, umfassen. Auf diese Weise lässt sich die Ausrichtung der RFID-Leseeinheit im Raum kalibrieren.

Die RFID-Leseeinheit kann an einer Person befestigt sein, vorzugsweise an deren Hand, deren Arm, deren Unterarm, deren Bein, deren Kleidungsstück oder deren Gürtel getragen werden. Auf diese Weise folgt die RFID-Leseeinheit der Bewegung des Kommissionierers, wenn dieser auf das Lagerfach zugreift, so dass sich aus dem zeitlichen Verlauf der Phasenlage der Antwortsignale das Fach, auf welches zugegriffen wird, identifizieren lässt.

Vorzugsweise umfasst das erfindungsgemäße Verfahren das Identifizieren eines Bewegungsmusters der Person bei dem Zugriff auf das Fach. Das Identifizieren eines Bewegungsmusters kann insbesondere mittels einer Bewegungsdetektoreinheit erfolgen, welche an der Person befestigt ist, vorzugsweise an einer Hand, einem Arm, einem Unterarm, einem Bein, einem Kleidungsstück oder einem Gürtel der Person getragen wird. Die Bewegungsdetektoreinheit kann mit der RFID-Leseeinheit elektrisch und/oder mechanisch gekoppelt sein, insbesondere auch in die RFID-Leseeinheit integriert sein.

Das Identifizieren eines Bewegungsmusters mittels der Bewegungsdetektoreinheit und gegebenenfalls der Vergleich mit gespeicherten Bewegungsmustern erlauben es, zu bestimmen, wann der Kommissionierer auf ein Fach zugreift. Dies kann einerseits die Analyse des zeitlichen Verlaufs der Phasenlage unterstützen, indem beispielsweise der Umkehrpunkt einer Greifbewegung nicht oder nicht nur aus der Phasenlage, sondern mittels eines Bewegungssensors bestimmt wird. Ebenso kann die Identifizierung eines Bewegungsmusters dazu dienen, Fehlbestimmungen bzw. Fehlaktivierungen zu vermeiden, wenn der Kommissionierer mit der RFID-Leseeinheit sich lediglich nahe an RFID-Transpondereinheiten vorbeibewegt, jedoch nicht auf Lagerfächer zugreift.

In einer Weiterbildung ermöglicht es der Einsatz der separaten Bewegungsdetektoreinheit, die RFID-Leseeinheit nur dann zu aktivieren, wenn der Kommissionierer tatsächlich auf ein Fach zugreift. Auf diese Weise lässt sich der Energieverbrauch der RFID-Leseeinheit minimieren, da die RFID-Leseeinheit nicht länger kontinuierlich elektromagnetische Signale aussendet und empfängt, sondern nur dann, wenn tatsächlich auf ein Fach zugegriffen wird.

Das Identifizieren eines Bewegungsmusters der Person kann das Identifizieren jeder körperlichen Bewegung der Person umfassen, welche dazu geeignet ist, einen Zugriff auf das Fach eines Lagers anzuzeigen.

In einer bevorzugten Ausführungsform umfasst das Bewegungsmuster eine Greifbewegung der Person bei dem Zugriff auf das Fach. Charakteristisch ist insbesondere die Umkehrbewegung zwischen dem Griff in das Fach bzw. dem Greifen des Artikels und dem Zurückziehen der Hand aus dem Fach.

In einer bevorzugten Ausführungsform umfasst das Identifizieren des Bewegungsmusters bzw. der Greifbewegung das Erfassen von Muskelimpulsen und/oder Sehnenimpulsen. Insbesondere können Muskelimpulse und/oder Sehnenimpulse erfasst werden, welche mit der Bewegung der Finger der Hand assoziiert sind.

Das Identifizieren des Bewegungsmusters bzw. der Greifbewegung kann alternativ oder zusätzlich auch das Erfassen einer Linearbeschleunigung und/oder Rotationsbeschleunigung umfassen. Auch die Linearbeschleunigung und/oder Rotationsbeschleunigung eines mit der Hand oder dem Arm des Kommissionierers verbundenen Sensors weist beim Zugriff auf das Fach einen charakteristischen Verlauf auf, welcher dazu verwendet werden kann, den Zeitpunkt des Zugriffs auf das Fach zu bestimmen.

Alternativ oder zusätzlich kann das Identifizieren einer Greifbewegung auch das Erfassen einer Fingerkrümmung umfassen. Das Erfassen der Fingerkrümmung kann vorzugsweise eine Streulichtdetektion, beispielsweise die Detektion von Streulicht in einer Glasfaser, und/oder eine Magnetfelddetektion, beispielsweise eine Detektion der Veränderung eines Magnetfeldes durch Verformung eines mit dem Finger der Person verbundenen magnetischen Elements, und/oder eine Beschleunigungsdetektion umfassen.

Vorzugsweise umfasst das Verfahren zusätzlich den Schritt des Bestimmens einer räumlichen Orientierung der RFID-Leseeinheit durch Analysieren des Bewegungsmusters bzw. der Greifbewegung. Beispielsweise lässt sich durch Analysieren der Greifbewegung, wie sie mit Bezug auf die vorangehenden Ausführungsformen beschrieben wurde, erfassen, ob die Handfläche des Kommissionierers nach oben, unten, links oder rechts gedreht wird. Daraus lassen sich Rückschlüsse auf das Fach ziehen, auf welches der Kommissionierer zugreift. Die Zuverlässigkeit und Selektivität der Transponderlesung wird dadurch zusätzlich erhöht.
Das Verfahren kann in einer Weiterbildung ferner ein selektives Aktivieren einer Antenne der RFID-Leseeinheit, insbesondere ein selektives Aktivieren der Antenne aus einer Mehrzahl von Antennen der RFID-Leseeinheit, in Abhängigkeit von der räumlichen Orientierung der RFID-Leseeinheit umfassen. Dadurch kann aus der Mehrzahl von Antennen des RFID-Lesegeräts diejenige Antenne mit dem Richtdiagramm in Richtung des richtigen Transponders aktiviert werden, um Fehllesungen zu unterdrücken. Sind beispielsweise die Transponder in allen Fächern an der Fachoberseite angebracht und wird aus der Analyse der Greifbewegung bestimmt, dass die Handfläche des Kommissionierers beim Greifen in das Fach nach oben gerichtet ist, so wird nur diejenige Antenne der RFID-Leseeinheit aktiviert, welche bei dieser Handstellung nach oben gerichtet ist. Dadurch werden Fehllesungen, welche durch die RFID-Transpondereinheiten der darunterliegenden oder der seitlich benachbarten Lagerfächer hervorgerufen werden könnten, wirksam vermieden.
In einer bevorzugten Ausführungsform wird die RFID-Leseeinheit zum Aussenden des elektromagnetischen Signals und/oder zum Erfassen der elektromagnetischen Antwortsignale in Abhängigkeit von dem Identifizieren des Bewegungsmusters bzw. der Greifbewegung aktiviert, vorzugsweise ausschließlich dann aktiviert, wenn ein vorbestimmtes Bewegungsmuster bzw. eine vorbestimmte Greifbewegung, welche einem Zugriff auf das Fach entspricht, identifiziert wird.
Das Aktivieren der RFID-Leseeinheit in Reaktion auf das Identifizieren eines einem Zugriff auf das Fach entsprechenden Bewegungsmusters bzw. einer entsprechenden Greifbewegung erhöht die Selektivität der Transponderlesung und steigert damit die Zuverlässigkeit bei der Identifizierung des richtigen Fachs des Lagersystems, weil unbeabsichtigte Transponderlesungen, welche keinem Zugriff auf ein Fach des Lagersystems entsprechen, vermieden werden.

Gemäß diesem Aspekt wird ein Verfahren zum Identifizieren eines Zugriffs auf Fächer eines Lagersystems beschrieben, denen jeweils RFID-Transpondereinheiten zugeordnet sind, mit den Schritten des Identifizierens eines Bewegungsmusters einer Person, um den Zugriff auf ein Fach des Lagersystems zu erfassen, des Aussendens eines elektromagnetischen Signals mittels einer RFID-Leseeinheit und des Erfassens eines elektromagnetischen Antwortsignals, welche von zumindest einer der RFID-Transpondereinheiten in Reaktion auf das ausgesandte Signal erzeugt wird, mittels der RFID-Leseeinheit, um daraus bei dem Zugriff auf das Fach die dem Fach zugeordnete RFID-Transpondereinheit zu identifizieren, wobei das Identifizieren der RFID-Transpondereinheit in Abhängigkeit von dem Identifizieren des Bewegungsmusters der Person erfolgt.
In einer bevorzugten Ausführungsform umfasst das Identifizieren des Bewegungsmusters das Analysieren eines zeitlichen Verlaufs einer Phasenlage der Antwortsignale, insbesondere das Analysieren einer zeitlichen Variation der Phasenlage.
Das Bewegungsmuster muss jedoch nicht notwendigerweise aus den RFID-Signalen erfasst werden, sondern kann auch mittels einer separaten Bewegungssensorik erfasst werden, wie sie vorangehend mit Bezug auf den ersten Aspekt der Erfindung beschrieben wurde.
Das Aussenden des elektromagnetischen Signals und/oder das Erfassen des elektromagnetischen Antwortsignals kann in diesem Fall in Abhängigkeit von dem identifizierten Bewegungsmuster erfolgen.
Vorzugsweise kann das Aussenden des elektromagnetischen Signals und/oder das Erfassen des elektromagnetischen Antwortsignals ausschließlich in Reaktion auf das Identifizieren des Bewegungsmusters der Person erfolgen, d.h., nur dann erfolgen, wenn ein Bewegungsmuster der Person, welches einem Zugriff auf ein Fach des Lagersystems entspricht, identifiziert wurde.
Auf diese Weise wird ein energiesparender Betrieb der RFID-Leseeinheit ermöglicht, weil die Leseeinheit nur dann zum Aussenden eines elektromagnetischen Signals und/oder zum Erfassen eines elektromagnetischen Antwortsignals aktiviert werden muss, wenn tatsächlich auf ein Fach des Lagersystems zugegriffen wird.

Das Identifizieren des Bewegungsmusters kann vorzugsweise mittels einer Bewegungsdetektoreinheit erfolgen, welche mit der RFID-Leseeinheit gekoppelt ist und insbesondere an einer Hand, einem Arm, einem Unterarm, einem Bein, einem Kleidungsstück oder einem Gürtel der Person getragen werden kann.

Die Bewegungsdetektoreinheit kann insbesondere in die RFID-Leseeinheit integriert sein.

In einer bevorzugten Ausführungsform umfasst das Bewegungsmuster eine Greifbewegung der Person. Die Bewegungsdetektoreinheit bzw. die RFID-Leseeinheit ist in diesem Fall vorzugsweise an einer Hand oder einem Arm, insbesondere einem Unterarm, der Person befestigt.

In einer bevorzugten Ausführungsform umfasst das Identifizieren des Bewegungsmusters bzw. der Greifbewegung das Erfassen von Muskelimpulsen und/oder Sehnenimpulsen.

Das Identifizieren des Bewegungsmusters bzw. der Greifbewegung kann alternativ oder zusätzlich auch das Erfassen einer Linearbeschleunigung und/oder einer Rotationsbeschleunigung umfassen.

In einer bevorzugten Ausführungsform umfasst das Identifizieren der Greifbewegung das Erfassen einer Fingerkrümmung. Das Erfassen der Fingerkrümmung kann eine Streulichtdetektion und/oder eine Magnetfelddetektion und/oder eine Beschleunigungsdetektion umfassen.

Die Bewegungsdetektoreinheit bzw. die RFID-Leseeinheit, welche mit der Bewegungsdetektoreinheit gekoppelt ist oder in welche die Bewegungsdetektoreinheit integriert ist, ist in diesem Fall vorzugsweise an der Hand der Person befestigt.

In einer bevorzugten Ausführungsform umfasst das Verfahren das Bestimmen einer Höhenposition der RFID-Leseeinheit. Das Bestimmen der Höhenposition kann vorzugsweise ein Erfassen eines Luftdrucks umfassen.

In einer bevorzugten Ausführungsform umfasst das Verfahren das Bestimmen einer Raumorientierung der RFID-Leseeinheit. Das Bestimmen der Raumorientierung kann vorzugsweise ein Erfassen eines magnetischen Feldes, insbesondere des Erdmagnetfelds, umfassen.
In einer bevorzugten Ausführungsform ist das Bewegungsmuster bzw. die Greifbewegung, deren Identifikation das Aussenden des elektromagnetischen Signals und/oder das Erfassen des Antwortsignals auslöst, individuell an die Person angepasst. Beispielsweise kann ein lernendes System verwendet werden, welches ein Bewegungsmuster bzw. eine Greifbewegung des Kommissionierers speichert, im Betrieb die Bewegungen des Kommissionierers überwacht und mit dem gespeicherten Bewegungsmuster vergleicht und die RFID-Einheit nur dann aktiviert, wenn eine hinreichende Übereinstimmung festgestellt wird. Die Zuverlässigkeit und Genauigkeit des erfindungsgemäßen Verfahrens lassen sich dadurch zusätzlich steigern.
In einer Weiterbildung umfasst das Verfahren auch das Steuern von mit RFID-Transpondern ausgestatteten Peripheriegeräten des Lagersystems oder Komponenten des Lagersystems mittel der RFID-Leseeinheit.
Das Steuern kann das Lesen einer Kennung eines RFID-Transponders mittels der RFID-Leseeinheit und das Auswählen einer von dem Peripheriegerät bzw. der Komponente auszuführenden Aktion umfassen.
Die Kennung und die ausgewählte Aktion können über eine drahtlose Verbindung an ein zentrales Steuersystem übermittelt werden, welches das Peripheriegerät bzw. die Komponente veranlasst, die ausgewählte Aktion auszuführen. Ein Peripheriegerät kann beispielsweise ein Drucker sein, und die ausgewählte Aktion kann ein Druckauftrag, beispielsweise das Drucken einer Kommissionierliste, sein.
Gemäß dem ersten Aspekt bezieht sich die Erfindung auch auf eine Vorrichtung zum Identifizieren eines Zugriffs auf Fächer eines Lagersystems, denen jeweils RFID-Transpondereinheiten zugeordnet sind, wobei die Vorrichtung eine tragbare RFID-Leseeinheit umfasst und dazu eingerichtet ist, ein elektromagnetisches Signal auszusenden und eine Phasenlage einer Mehrzahl von elektromagnetischen Antwortsignalen, welche jeweils von RFID-Transpondereinheiten in Reaktion auf das ausgesandte Signal erzeugt werden, zu erfassen und aus einem zeitlichen Verlauf der Phasenlage der Antwortsignale beim Zugriff auf ein Fach des Lagersystems die dem Fach zugeordnete RFID-Transpondereinheit aus der Mehrzahl von RFID-Transpondereinheiten zu identifizieren.

Gemäß einer bevorzugten Ausführungsform ist die Vorrichtung dazu eingerichtet, den Zugriff auf das Fach aus der Phasenlage der Antwortsignale zu identifizieren.

In einer bevorzugten Ausführungsform ist die Vorrichtung dazu eingerichtet, die zeitliche Variation der Phasenlage der Mehrzahl der Antwortsignale zu vergleichen.

In einer Weiterbildung der Erfindung ist die Vorrichtung dazu eingerichtet, aus dem zeitlichen Verlauf der Phasenlage der Mehrzahl der Antwortsignale bei dem Zugriff jeweils einen Umkehrpunkt zu bestimmen und eine Phasendifferenz zwischen dem Umkehrpunkt und einem extremalen Phasenwert zu vergleichen.

Alternativ oder zusätzlich kann die Vorrichtung dazu eingerichtet sein, ein lokales Extremum und/oder eine Krümmung des zeitlichen Verlaufs der Phasenlage zu erfassen.

In einer bevorzugten Ausführungsform ist die Vorrichtung dazu eingerichtet, aus der Phasenlage der Antwortsignale einen Abstand zwischen der RFID-Leseeinheit und den jeweiligen RFID-Transpondereinheiten zu bestimmen.

Vorzugsweise kann die Vorrichtung eine Einheit zum Bestimmen einer Höhenposition der RFID-Leseeinheit, welche mit der RFID-Leseeinheit gekoppelt ist, umfassen. Die Einheit zum Bestimmen der Höhenposition kann vorzugsweise eine Luftdruckmesseinheit umfassen.

In einer Weiterbildung umfasst die Vorrichtung eine Einheit zum Bestimmen einer Raumorientierung der RFID-Leseeinheit, welche mit der RFID-Leseeinheit gekoppelt ist. Die Einheit zum Bestimmen der Raumorientierung kann vorzugsweise eine Einheit zum Erfassen eines magnetischen Feldes, insbesondere des Erdmagnetfelds umfassen. Dazu kann jeder Magnetfelddetektor eingesetzt werden, beispielsweise ein Halldetektor.

Die erfindungsgemäße Vorrichtung ist vorzugsweise dazu eingerichtet, zumindest teilweise an einer Person befestigt zu werden, insbesondere an einer Hand, einem Arm, einem Unterarm, einem Bein, einem Kleidungsstück oder einem Gürtel der Person befestigt zu werden.

In einer Weiterbildung umfasst die Vorrichtung eine Bewegungsdetektoreinheit. Die Bewegungsdetektoreinheit kann insbesondere dazu eingerichtet sein, an einer Person befestigt zu werden und ein Bewegungsmuster der Person bei dem Zugriff auf das Fach zu identifizieren.

Das Bewegungsmuster der Person kann eine Greifbewegung der Person sein. In diesem Fall ist die Bewegungsdetektoreinheit vorzugsweise dazu eingerichtet, an einer Hand oder an einem Arm, insbesondere einem Unterarm, der Person befestigt zu werden.

Die Bewegungsdetektoreinheit kann zum Erfassen von Muskelimpulsen und/oder Sehnenimpulsen eingerichtet sein.

Alternativ oder zusätzlich kann die Bewegungsdetektoreinheit zum Erfassen einer Linearbeschleunigung und/oder einer Rotationsbeschleunigung eingerichtet sein.

In einer bevorzugten Ausführungsform ist die Bewegungsdetektoreinheit zum Erfassen einer Fingerkrümmung eingerichtet. Insbesondere kann die Bewegungsdetektoreinheit zur Detektion von Streulicht und/oder zur Detektion von Magnetfeldern und/oder zur Detektion von Beschleunigung eingerichtet sein.

In einer bevorzugten Ausführungsform umfasst die Vorrichtung eine Einheit zum Analysieren des Bewegungsmusters bzw. der Greifbewegung und zum Bestimmen einer räumlichen Orientierung der RFID-Leseeinheit während der Bewegung der Person bzw. ihrer Greifbewegung.

In einer Weiterbildung der vorangehenden Ausführungsform ist die Vorrichtung dazu eingerichtet, in Abhängigkeit von der räumlichen Orientierung der RFID-Leseeinheit selektiv eine Antenne der RFID-Leseeinheit zu aktivieren, insbesondere die Antenne selektiv unter einer Mehrzahl von Antennen der RFID-Leseeinheit zu aktivieren.

Vorzugsweise kann die Vorrichtung dazu eingerichtet sein, die RFID-Leseeinheit in Abhängigkeit von dem Identifizieren des Bewegungsmusters bzw. der Greifbewegung zu aktivieren. Insbesondere kann die Vorrichtung dazu eingerichtet sein, die RFID-Leseeinheit nur dann zu aktivieren, wenn ein dem Zugriff auf ein Fach des Lagersystems entsprechendes Bewegungsmuster bzw. eine entsprechende Greifbewegung identifiziert wurde.

Gemäß einem zweiten Aspekt wird eine Vorrichtung zum Identifizieren eines Zugriffs auf Fächer eines Lagersystems offenbart, denen jeweils RFID-Transpondereinheiten zugeordnet sind, mit einer Bewegungsdetektoreinheit, welche dazu eingerichtet ist, ein Bewegungsmuster einer Person beim Zugriff auf ein Fach des Lagersystems zu identifizieren, sowie mit einer RFID-Leseeinheit, welche mit der Bewegungsdetektoreinheit gekoppelt ist und dazu eingerichtet ist, ein elektromagnetisches Signal auszusenden und ein elektromagnetisches Antwortsignal, welches von zumindest einer der RFID-Transpondereinheiten in Reaktion auf das ausgesandte Signal erzeugt wird, zu erfassen und daraus bei dem Zugriff auf das Fach des Lagersystems die dem Fach zugeordnete RFID-Transpondereinheit zu identifizieren, wobei die Vorrichtung dazu eingerichtet ist, die RFID-Transpondereinheit in Abhängigkeit von dem Identifizieren des Bewegungsmusters zu identifizieren.

Die Bewegungsdetektoreinheit kann jede Einheit sein, welche dazu eingerichtet ist, Rückschlüsse auf die Bewegung der Person relativ zu einer Transpondereinheit zu treffen.

In einer Weiterbildung ist die Vorrichtung dazu eingerichtet, ein Bewegungsmuster bzw. eine Greifbewegung der Person zu speichern. Die Vorrichtung kann weiter dazu eingerichtet sein, das gespeicherte Bewegungsmuster bzw. die gespeicherte Greifbewegung mit dem Bewegungsmuster bzw. der Greifbewegung beim Zugriff auf das Fach zu vergleichen. Auf diese Weise lässt sich mit größerer Zuverlässigkeit bestimmen, ob und wann der Kommissionierer auf das Fach des Lagersystems zugreift.

In einer bevorzugten Ausfuhrungsform kann die Bewegungsdetektoreinheit dazu eingerichtet sein, die Bewegung der Person, welche die RFID-Leseeinheit trägt, aus einem zeitlichen Phasenverlauf der Antwortsignale zu erfassen, insbesondere aus einer zeitlichen Variation des Phasenverlaufs.

Die Bewegungsdetektoreinheit muss daher nicht notwendigerweise auf die RFID-Phasenlage zurückgreifen und kann jede Art von Bewegungssensor umfassen.

Die Vorrichtung kann in einer bevorzugten Ausfuhrungsform dazu eingerichtet sein, das elektromagnetische Signal in Abhängigkeit von dem Identifizieren des Bewegungsmusters auszusenden und/oder das elektromagnetische Antwortsignal in Abhängigkeit von dem Identifizieren des Bewegungsmusters zu erfassen.

Insbesondere kann die Vorrichtung dazu eingerichtet sein, das elektromagnetische Signal ausschließlich in Reaktion auf das Identifizieren des Bewegungsmusters auszusenden und/oder das elektromagnetische Antwortsignal ausschließlich in Reaktion auf das Identifizieren des Bewegungsmusters zu erfassen.

Die Bewegungsdetektoreinheit kann insbesondere in die RFID-Leseeinheit integriert sein.

In einer bevorzugten Ausführungsform ist die Bewegungsdetektoreinheit dazu eingerichtet, an der Person, insbesondere an einer Hand, einem Arm, einem Unterarm, einem Bein, einem Kleidungsstück oder einem Gürtel der Person, befestigt zu werden.

Die Bewegungsdetektoreinheit ist in einer bevorzugten Ausfuhrungsform dazu eingerichtet, an einer Hand oder einem Arm, insbesondere einem Unterarm, der Person befestigt zu werden und eine Greifbewegung der Person bei dem Zugriff auf das Fach zu identifizieren.

Vorzugsweise ist die Bewegungsdetektoreinheit zum Erfassen von Muskelimpulsen und/oder Sehnenimpulsen eingerichtet. Eine solche Bewegungsdetektoreinheit kann insbesondere einen Elektromyographen oder einen Elektroneurographen umfassen.

Alternativ oder zusätzlich kann die Bewegungsdetektoreinheit zum Erfassen einer Linearbeschleunigung und/oder einer Rotationsbeschleunigung eingerichtet sein. Eine solche Bewegungsdetektoreinheit kann einen Beschleunigungssensor umfassen.

In einer bevorzugten Ausführungsform ist die Bewegungsdetektoreinheit zum Erfassen einer Fingerkrümmung eingerichtet, vorzugsweise zur Detektion von Streulicht und/oder zur Detektion von Magnetfeldern und/oder zur Detektion von Beschleunigung eingerichtet.

In einer Weiterbildung umfasst die Vorrichtung eine Einheit zum Bestimmen einer Höhenposition der RFID-Leseeinheit, welche mit der RFID-Leseeinheit gekoppelt ist. Die Einheit zum Bestimmen der Höhenposition kann vorzugsweise einen Luftdrucksensor umfassen.

In einer bevorzugten Ausführungsform umfasst die Vorrichtung eine Einheit zum Bestimmen einer Raumorientierung der RFID-Leseeinheit, welche mit der RFID-Leseeinheit gekoppelt ist. Die Einheit zum Bestimmen der Raumorientierung kann vorzugsweise einen Sensor zum Erfassen eines magnetischen Feldes, insbesondere des Erdmagnetfelds, umfassen.

### Detaillierte Beschreibung bevorzugter Ausführungsformen

Die Merkmale und zahlreichen Vorteile der Erfindung lassen sich am besten anhand einer detaillierten Beschreibung bevorzugter Ausführungsformen unter Bezugnahme auf die anliegenden Zeichnungen verstehen, in denen:
- Fig. 1: schematisch die Anordnung zweier benachbarter Regalfächer mit zugehörigen Transpondern und einen Zugriff auf das erste Regalfach veranschaulicht;
- Fig. 2: die Veränderung der Phasenlage der von dem ersten und zweiten Transponder bei dem Zugriff nach Fig. 1 registrierten Antwortsignale zeigt; und
- Fig. 3: den gemessenen zeitlichen Phasenverlauf bei Vorbeibewegung der Leseeinheit an fünf aufeinanderfolgenden Transpondereinheiten zeigt.

Die Erfindung wird nachfolgend am Beispiel eines Lagerregals mit einer Vielzahl von Fächern, die manuell mit verschiedenen Artikeln bestückt werden können, beschrieben. Ein Lager im Sinne der Erfindung kann jedoch jede Einrichtung bezeichnen, in welcher Artikel in einer vorbestimmten Ordnung zeitweilig oder dauerhaft in verschiedenen Fächern vorgehalten werden. Die Fächer können vorbestimmte Positionen oder Orte innerhalb des Lagersystems bezeichnen und insbesondere jede Art von Behältnis sein, welches zur Aufnahme von Artikeln geeignet ist. Bei den Artikeln kann es sich beispielsweise um Bauteile oder Werkstücke für einen Produktionsprozess oder um beliebige andere Gegenstände handeln, die in den Fächern vorgehalten werden können.

Der Aufbau und die Anordnung eines solchen Lagers sowie die grundlegende Konfiguration eines RFID-Systems zur Erfassung des Zugriffs auf die Fächer ist dem Fachmann aus der DE 10 2004 041 491 A1 bekannt, auf die deshalb ergänzend zur nachfolgenden Beschreibung verwiesen wird.

Die Fächer des Lagersystems sind mit einem oder mehreren RFID-Transpondern ausgerüstet, welche beispielsweise an der vorderen oberen Innenseite des Lagerfachs angeordnet sein können und jeweils eine auslesbare Identifikationskennung aufweisen, die das entsprechende Lagerfach eindeutig identifiziert.

Ein Kommissionierer, welcher in dem Lagersystem tätig ist, hat die Aufgabe, entsprechend eines Kommissionierauftrags vorgegebene Artikel aus vorbestimmten Fächern des Lagersystems zu entnehmen oder sie dort zu platzieren. Um zu überprüfen, ob der Kommissionierer entsprechend dem Kommissionierauftrag auf die richtigen Fächer zugreift und ihn gegebenenfalls bei einem Fehlzugriff zu informieren, trägt der Kommissionierer an seinem Arm oder Handgelenk eine miniaturisierte RFID-Leseeinheit, welche beim Zugriff auf das Lagerfach die dort angebrachte RFID-Transpondereinheit unbemerkt erfasst. Die RFID-Leseeinheit sendet dazu ein Ausgangssignal aus, beispielsweise im UHF-Frequenzbereich, welches von dem RFID-Transponder des entsprechenden Lagerfachs erfasst wird. Der RFID-Transponder moduliert das eingestrahlte elektromagnetische Feld mit seiner Kennung, welche das entsprechende Lagerfach bezeichnet. Das modulierte Signal wird von der RFID-Leseeinheit erfasst, und aus dem modulierten Signal wird die Transponderkennung ausgelesen. Die RFID-Leseeinheit gleicht die erfasste Transponderkennung mit den Kommissionieraufträgen ab, um etwaige Fehlkommissionierungen zu detektieren. Die RFID-Leseeinheit kann dazu mittels eines zweiten, von RFID verschiedenen Übertragungsstandards drahtlos mit einer Basisstation kommunizieren, welche mit einem System zur Lagerverwaltung und Lagersteuerung verbunden ist. Der Abgleich der Fächerkennung mit den Kommissionieraufträgen kann daher sowohl in dem Handgerät als auch in der Basisstation erfolgen. Bei dem zweiten Übertragungsstandard kann es sich beispielsweise um einen WLAN-Standard handeln.

Der Abgleich der identifizierten Transponderkennung mit den Kommissionieraufträgen ermöglicht es, etwaige Fehlkommissionierungen zu detektieren. Der Kommissionierer erhält beim Griff in das falsche Lagerfach eine optische, akustische oder haptische Rückmeldung über das RFID-Lesegerät an seiner Hand oder seinem Arm, so dass der Fehler vermieden oder korrigiert werden kann. Alternativ oder ergänzend kann auch beim Griff in das korrekte Lagerfach eine optische, akustische oder haptische Rückmeldung gegeben werden.

Der Transponder ist vorzugsweise ein sogenannter passiver Transponder ohne eigene Stromversorgung, welcher sich allein aus den Funksignalen des RFID-Lesegeräts versorgt. Solche Transponder sind kostengünstig herzustellen und können mit minimalem Aufwand auch in bestehenden Lagersystemen nachgerüstet werden. Alternativ können jedoch auch aktive Transponder mit eigener Energiequelle eingesetzt werden.

Grundsätzlich kann im Rahmen der Erfindung jeder RFID-Standard zum Einsatz kommen, wobei der Frequenzbereich und das Modulationsverfahren in Abhängigkeit von der spezifischen Anwendung, beispielsweise der Größe des Lagers und der Form und Größe der Lagerfächer, gewählt werden können.

Eine Schwierigkeit bei der automatischen Erfassung der Entnahme- und Abgabefächer liegt darin, dass oftmals mehrere Transpondereinheiten im Sendebereich der RFID-Leseeinheit gleichzeitig ansprechen. Wenn die RFID-Leseeinheit statt der Transpondereinheit des Faches, auf welches der Kommissionierer tatsächlich zugreift, die Transpondereinheit eines benachbarten Faches identifiziert, kann es dabei zu fehlerhaften Lesungen bzw. einer fehlerhaften Rückmeldung an den Kommissionierer kommen. Solche Fehler sind zeitaufwändig, weil der Arbeitsfluss des Kommissionierers unterbrochen wird. Häufige unberechtigte Fehlermeldungen setzen zudem die Akzeptanz des Überprüfungssystems herab und können dazu führen, dass der Kommissionierer die Fehlermeldungen des Systems grundsätzlich ignoriert.

Die Erfinder haben erkannt, dass sich die Zuverlässigkeit der Kennung des Lagerfachs durch Analyse des zeitlichen Verlaufs der Phasenlage der Antwortsignale der RFID-Transpondereinheiten deutlich erhöhen lässt. Der Vergleich der Phasenlage des empfangenen Antwortsignals mit dem Sendesignal ergibt die Phasenlage des Transponders. Aus der Phasenlage lässt sich auf die Entfernung des Transponders rückschließen, eindeutig jedoch nur im Entfernungsbereich bis maximal zur halben Wellenlänge. Wird beispielsweise ein UHF-Sendesignal mit der Frequenz 868 MHz verwendet, lässt sich die Phase eindeutig nur im Bereich bis ca. 17 cm Entfernung bestimmen. Durch die Periodizität der Phase verliert die Entfernungsmessung bei größeren Entfernungen die Eindeutigkeit.

Jedoch ermöglicht eine Analyse des zeitlichen Verlaufs der Phasenlage der Transponder auch im mehrdeutigen Bereich Rückschlüsse auf die Relativbewegung der RFID-Leseeinheit relativ zu den Transpondereinheiten. Zwar ähnelt der Phasenverlauf benachbarter Transponder dem Phasenverlauf desjenigen Transponders, auf dessen Fach tatsächlich zugegriffen wird, in der Form. Jedoch unterscheiden sich die Phasenverläufe in der Variation und ermöglichen auf diese Weise eine Identifikation der richtigen Transpondereinheit.

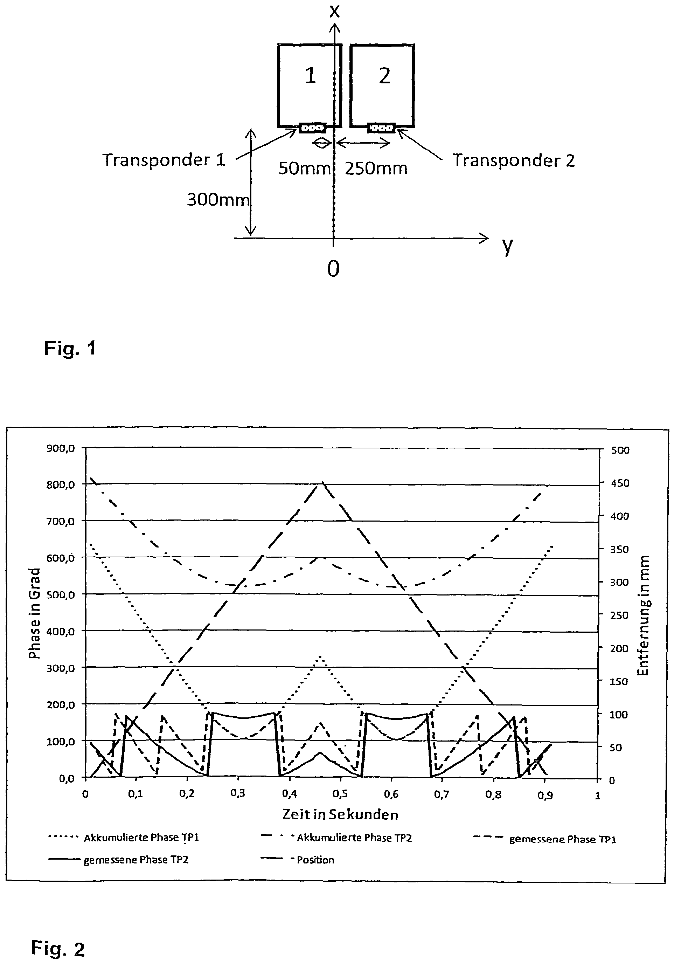

Fig. 1 veranschaulicht schematisch ein Lager mit zwei benachbarten Sichtlagerkästen 1 und 2 in den Abmessungen 150 mm x 200 mm, ausgestattet mit je einem zugehörigen Transponder TP1 bzw. TP2 an der Eingriffsöffnung des jeweiligen Kastens. Ein Kommissionierer, welcher einen Artikel aus dem Fach 1 entnehmen möchte, positioniert sich an der Position 0, ca. 300 mm von der Frontseite des Sichtlagerkastens entfernt, und greift entlang der gepunkteten Linie mit seinem Arm, an dessen Handgelenk er ein RFID-Lesegerät trägt, in den ersten Kasten, entnimmt den Artikel und zieht die Hand aus dem Sichtlagerkasten zurück.

In dem Diagramm der Fig. 2 ist für diesen exemplarischen Greifvorgang die Position der RFID-Leseeinheit beim Greifen in den Behälter als Abstand von der Nullposition in Abhängigkeit von der Zeit als gestrichelte Linie dargestellt. Fig. 2 zeigt zudem den entsprechenden Verlauf der Phase des Antwortsignals sowohl für den ersten Transponder, auf dessen Fach tatsächlich zugegriffen wird, als auch für den benachbarten zweiten Transponder. Das Diagramm zeigt für beide Transponder TP1 und TP2 sowohl die gemessenen Phasensignale, wie sie die RFID-Leseeinheit liefert, als auch den aus den Messsignalen abgeleiteten akkumulierten Phasenverlauf. Wie aus dem Diagramm zu ersehen ist, ähnelt die akkumulierte Phase für den zweiten Transponder TP2 der akkumulierten Phase für den ersten Transponder TP1 in ihrer Form. Die akkumulierte Phase nimmt bei einer Transponderposition an der Front des Behälters beim Griff zum Behälter (Bewegung zum Transponder hin) jeweils zuerst ab, dann wieder zu (Griff in den Behälter), dann wieder ab (Bewegung aus dem Behälter heraus, zum Transponder hin) und dann wieder zu (Bewegung vom Behälter weg). Beide akkumulierten Phasenverläufe erreichen ein lokales Maximum am Umkehrpunkt zwischen dem Greifen in den Behälter und dem Zurückziehen der Hand. Jedoch variiert die akkumulierte Phase des ersten Transponders TP1 dabei stärker als die akkumulierte Phase des Transponders TP2.

Die Differenz des akkumulierten Phasenwerts zwischen dem lokalen Extremum, welches dem Umkehrpunkt entspricht, und den benachbarten Extrema steigt mit abnehmender Entfernung zum Transponder. Sie ist für den ersten Transponder TP1, auf dessen Fach zugegriffen wird und an dem die RFID-Leseeinheit in einem Abstand von nur ca. 50 mm vorbeibewegt wird, daher größer als für den benachbarten zweiten Transponder TP2, an dem die Hand des Kommissionierers mit der RFID-Leseeinheit in einem größeren Abstand von 250 mm vorbeibewegt wird. Der größte Wert der Phasendifferenz entspricht auch in Szenarien, in denen Transpondersignale von mehr als zwei Transpondern detektiert werden, stets dem nächsten Transponder. Auf diese Weise lässt sich aus der Phasendifferenz zwischen dem Umkehrpunkt und den benachbarten Extrema auf das Fach schließen, auf welches zugegriffen wird.

Alternativ oder zusätzlich kann die Krümmung des Phasenverlaufs im Bereich des Extremums, welches dem Umkehrpunkt der RFID-Einheit entspricht, zur Bestimmung herangezogen werden. Wie Fig. 2 zeigt, ist die Krümmung im Bereich des Extremums für den ersten Transponder TP1 größer als für den zweiten Transponder TP2. Allgemein steigt der Wert der Krümmung am Extremum mit abnehmendem Abstand zwischen der RFID-Leseeinheit und dem RFID-Transponder. Durch Analyse der Krümmung im Bereich des Extremums lässt sich daher unter mehreren Antwortsignalen dasjenige Signal identifizieren, welches dem Fach entspricht, auf das der Kommissionierer tatsächlich zugreift.

Zusätzlich kann das RFID-Lesegerät dazu eingerichtet sein, die Empfangsleistung oder Feldstärke des Antwortsignals zu erfassen. Auch daraus lassen sich Rückschlüsse auf die Entfernung der RFID-Transpondereinheit von der RFID-Leseeinheit ziehen. Die richtige Transpondereinheit, welche dem Fach entspricht, auf das tatsächlich zugegriffen wird, kann dann als Transpondereinheit mit dem stärksten Antwortsignal bestimmt werden.

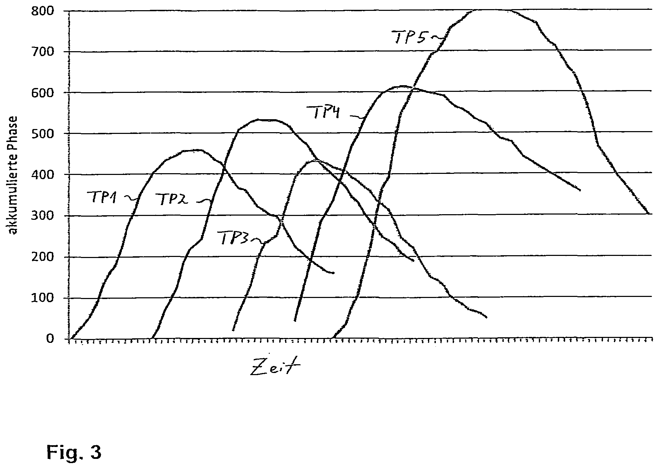

Fig. 3 zeigt zum Vergleich den gemessenen Phasenverlauf des Antwortsignals von fünf Transpondereinheiten TP1, TP2, TP3, TP4 und TP5, an welchen die RFID-Leseeinheit nacheinander lediglich vorbeibewegt wird. Das Vorzeichen der Phase ist durch die Leseeinheit invertiert und bereits auf einen Messungsbeginn bei t = 0 umgerechnet. Die Phase nimmt bei Annäherung der Leseeinheit an den Transponder zunächst zu, durchläuft ein Maximum, welches dem Ort des geringsten Abstandes zwischen der Leseeinheit und dem jeweiligen Transponder entspricht, und nimmt mit zunehmender Entfernung der Leseeinheit vom Transponder wieder ab. Während der Absolutwert der akkumulierten Phase von Transponder zu Transponder variiert, ist der Kurvenverlauf für alle fünf Transpondereinheiten sehr ähnlich. Insbesondere ist der Kurvenverlauf in seiner Form unterscheidbar von dem Phasenverlauf beim Zugriff auf ein Fach des Lagersystems, wie er in Fig. 2 veranschaulicht ist. Eine Analyse des Phasenverlaufs des Antwortsignals ermöglicht es daher, mit großer Zuverlässigkeit einen Zugriff des Kommissionierers auf ein Fach des Lagersystems zu identifizieren und zu unterscheiden von einer bloßen Vorbeibewegung an den Fächern ohne Zugriff. Diese beiden Szenarien lassen sich aus dem Phasenverlauf auch ohne detaillierte Analyse unterscheiden. In einem ersten Schritt kann daher aus dem Phasenverlauf zunächst bestimmt werden, ob der Kommissionierer überhaupt auf ein Fach des Lagers zugreift oder sich lediglich durch das Lager an den Fächern vorbeibewegt. In einem zweiten Schritt kann dann durch genauere Analyse des zeitlichen Verlaufs der gemessenen und der akkumulierten Phase, wie sie vorangehend mit Bezug auf Fig. 2 beschrieben wurden, bestimmt werden, auf welches der Fächer zugegriffen wurde.

Zur Unterstützung der Erfassung eines Zugriffs auf Fächer des Lagersystems kann die RFID-Leseeinheit mit zusätzlichen Sensoren ausgebildet sein, um die Bewegung des Kommissionierers zu erfassen und beispielsweise einen Greifvorgang zu erkennen. Der Bewegungssensor ist dabei vorteilhafterweise in die RFID-Leseeinheit integriert und wird direkt an der Hand bzw. dem Unterarm des Kommissionierers getragen.

Vorzugsweise sollte es die Greiferkennung ermöglichen, zwischen folgenden Stati zu unterscheiden: (1) keine Aktion; (2) Gehen ohne Greifen; (3) Beginn Vorgang Greifen in Behälter/Lagerfach; (4) Greifen in Behälter, Greifen des Artikels; (5) Zurückziehen der Hand aus Behälter/Lagerfach; (6) Beginn Vorgang Ablegen des Artikels; (7) Handbewegung zum Ablageort, Ablegen des Artikels; und (8) Zurückziehen der Hand. Dies lässt sich beispielsweise durch Messung einer linearen oder rotatorischen Beschleunigung an der Hand bzw. am Arm des Kommissionierers, durch Messung einer Anspannung der Handmuskeln oder durch Messung einer Fingerkrümmung erreichen.

Die Beschleunigungssensorik liefert ein relativ komplexes Ausgangssignal, welches mit unterschiedlich aufwändigen Algorithmen verarbeitet werden kann. Im einfachsten Fall genügt es, lediglich die auftretenden Beschleunigungsspitzen zu detektieren, aus deren Häufigkeit und Stärke dann die einzelnen Stati der Bewegung abgeleitet werden. Dazu können beispielsweise piezoelektrische, piezoresistive und/oder kapazitive Beschleunigungssensoren verwendet werden, wie sie in anderen technischen Bereichen routinemäßig eingesetzt werden. Der Beschleunigungssensor kann vorzugsweise in die RFID-Leseeinheit integriert sein, so dass unmittelbare Rückschlüsse auf die auf die Hand oder den Arm des Kommissionierers wirkenden Beschleunigungskräfte gezogen werden können. Eine Detektion der Linearbeschleunigung ermöglicht neben einem Erkennen der Beschleunigungsspitzen beim Griff in das Fach auch die Erkennung der Handhaltung durch eine Bestimmung des Normalkraftvektors. Die Erfassung einer rotatorischen Beschleunigung ermöglicht das Erkennen einer Drehung des Kommissionierers aus der Gehhaltung nach der Greifhaltung. In Kombination ermöglichen die Messdaten die Aufnahme einer Wegtrajektorie durch die Initialsensorik sowie eine Ermittlung der Annäherung an die Zielposition und ein Erkennen eines bevorstehenden Greifvorgangs.

Muskelspannungssensoren ermöglichen ein Vermessen der angespannten Fingermuskeln beim Greifvorgang. Dazu können insbesondere Nerven- und/oder Sehnenimpulse detektiert werden, beispielsweise unter Verwendung eines Elektromyographen oder Elektroneurographen. Solche Sensoren messen mittels auf der Haut anliegenden Elektroden die elektrische Aktivität in den darunterliegenden Muskeln, aus der sich auf den Bewegungszustand rückschließen lässt. Die Muskelaktivität der Finger lässt sich beispielsweise mittels eines Sensorbandes am körperseitigen Ende des Unterarms erfassen. T. Scott Saponas et al. beschreiben in ihrem Artikel "Demonstrating the Feasibility of Using Forearm Electromyography for Muscle-Computer Interfaces", Proceedings of the CHI 2008, Anwendungen solcher Detektoren zur Eingabesteuerung für Computer. Die gewonnenen Erkenntnisse lassen sich auf ein Vermessen des Greifvorgangs durch Detektion der angespannten Fingermuskeln im Rahmen der vorliegenden Erfindung übertragen und ermöglichen ein zuverlässiges Bestimmen des Greifvorgangs.

Unterstützend kann zur Detektion des Greifvorgangs auch eine Messung der Fingerkrümmung erfolgen, beispielsweise durch faseroptische Bestimmung der Fingerkrümmung mittels Streulichtdetektion an einer gebogenen Glasfaser, durch an den Fingern positionierte Beschleunigungssensoren oder durch Biegesensoren am Fingerrücken, welche eine Variation eines magnetischen Feldes oder eines elektrischen Widerstands beim Biegen eines am Fingerrücken positionierten Sensorelements erfassen.

Neben einer Unterstützung der Greiferkennung können die Bewegungssensoren auch die selektive Transponderlesung unterstützen. Beispielsweise kann über die Linearbeschleunigungssensorik erkannt werden, welche Handhaltung der Kommissionierer beim Griff in das Fach des Lagers einnimmt, d.h., ob seine Handfläche nach oben, unten, links oder rechts gerichtet ist. Unter Berücksichtigung der Handhaltung kann nun selektiv diejenige der Antennen der RFID-Leseeinheit aktiviert werden, welche in Richtung des richtigen Transponders zeigt. Greift der Kommissionierer mit der Handfläche nach unten in das Fach hinein und befinden sich die dem Fach zugeordneten Transponder jeweils an der Oberseite des Fachs, kann beispielsweise nur die Antenne an der Oberseite der Hand aktiviert werden, um Fehllesungen durch die Transponder darunterliegender und seitlich benachbarter Lagerfächer zu unterdrücken.

Ein Identifizieren des Greifvorgangs unter Verwendung von Bewegungssensoren ermöglicht darüber hinaus auch einen besonders energiesparenden Betrieb des RFID-Systems, bei welchem die Leseeinheit nur dann aktiviert wird, wenn tatsächlich ein Greifvorgang erfolgt. Dies ist insbesondere bei batteriebetriebenen RFID-Einheiten von besonderem Vorteil, da auf diese Weise die Einsatzdauer zwischen zwei Ladevorgängen erhöht wird.

Zur weiteren Unterstützung der selektiven Transponderlesung kann die Ausgangsleistung (und damit die Lesereichweite) der RFID-Leseeinheit dynamisch angepasst werden. Beispielsweise kann aufgrund der Kommissionieraufträge bestimmt werden, wie groß die Lagerfächer sind, auf welche zugegriffen werden wird, und wie weit der Transponder von der Hand des Kommissionierers entfernt sein wird. Bei größeren Fächern kann die Leistung entsprechend erhöht werden, bei kleineren Fächern entsprechend verringert werden.

Die RFID-Leseeinheit kann darüber hinaus auch einen Drucksensor umfassen, welcher durch Messung des Luftdrucks eine Höhenposition bestimmt. Der Drucksensor ist vorzugsweise in die an der Hand oder dem Unterarm des Kommissionierers positionierte RFID-Leseeinheit integriert und ermöglicht so die Bestimmung der Greifhöhe. Daraus lassen sich Rückschlüsse ziehen, auf welche der Regalebenen des Lagers der Kommissionierer zugreift, um auf diese Weise das Fach, auf welches der Kommissionierer zugreift, von den darunterliegenden oder den darüberliegenden Fächern zu unterscheiden.

Vorzugsweise umfasst die RFID-Leseeinheit darüber hinaus einen Magnetfeldsensor, welcher das Erdmagnetfeld detektiert und auf diese Weise Rückschlüsse auf die Ausrichtung der RFID-Leseeinheit im Raum zulässt. Diese Daten können sowohl zur Unterstützung der selektiven Transponderlesung als auch zur globalen Langzeitkalibrierung der RFID-Leseeinheit verwendet werden. Vorzugsweise umfasst der Magnetfeldsensor einen Hallsensor und ist in die RFID-Leseeinheit integriert.

In einem Kommissioniersystem arbeiten üblicherweise mehrere Kommissionierer, welche sich in ihrem Bewegungsmuster bzw. Greifstil unterscheiden. Zudem kann aufgrund der körpernahen Montage der RFID-Leseeinheit das Richtdiagramm der RFID-Antennen vom Körperbau der Kommissionierer abhängen. Die individuellen nutzerspezifischen Unterschiede können sowohl die Greiferkennung als auch die selektive Transponderlesung erschweren. Zur Vermeidung solcher Schwierigkeiten kann ein lernendes System eingesetzt werden, welches auf jeden Kommissionierer individuell angepasst ist. Beispielsweise kann der Kommissionierer anhand eines "Lernregals" oder eines "Lemauftrags" vordefinierte Vorgänge abarbeiten. Die dabei erfassten Sensordaten werden aufgezeichnet und als Bewegungsprofil bzw. Greifprofil des Benutzers gespeichert. Im späteren Betrieb ermöglicht ein Vergleich der detektierten Bewegung mit dem gespeicherten Profil dann eine zuverlässige Identifikation der Greifvorgänge. Das gespeicherte Profil kann im laufenden Betrieb auch kontinuierlich adaptiert werden, um beispielsweise einer fortschreitenden Ermüdung des Kommissionierers Rechnung zu tragen.

Die RFID-Leseeinheit kann in einer Weiterbildung der Erfindung auch als Eingabevorrichtung für Peripheriegeräte des Lagersystems, beispielsweise für Drucker oder für eine Zeiterfassungsvorrichtung, verwendet werden. Dabei können weitere RFID-Transponder als Eingabemedien verwendet werden, um so auf Bedienelemente am zu tragenden Gerät weitestgehend verzichten zu können.

Beispielsweise kann ein RFID-Transponder mit einer bestimmten Identifikationskennung beschrieben werden, welche im Lagersystem mit einem vordefinierten Ereignis verknüpft wird, beispielsweise mit dem Abrufen eines neuen Auftrags, der Unterbrechung eines Auftrags oder einem Druckauftrag. Durch Erfassen eines Transponders an einem Drucker mittels der RFID-Leseeinheit kann beispielsweise ein Druckauftrag über den zweiten Übertragungsstandard und die Basisstation an den entsprechenden Drucker geleitet werden, so dass am Drucker ohne weitere Aktion ein Kommissionierauftrag abgerufen und bereitgestellt werden kann.

Die Beschreibung der bevorzugten Ausführungsbeispiele und der Zeichnungen dient allein der Veranschaulichung der Erfindung und der damit erzielten Vorteile, soll die Erfindung aber nicht beschränken. Der Umfang der Erfindung ergibt sich allein aus den nachfolgenden Ansprüchen.

## Patentansprüche

1. Verfahren zum Identifizieren eines Zugriffs auf Fächer eines Lagersystems, denen jeweils RFID-Transpondereinheiten (TP1,..., TP5) zugeordnet sind, mit folgenden Schritten:
Aussenden eines elektromagnetischen Signals mittels einer tragbaren RFID-Leseeinheit; und Erfassen einer Mehrzahl von elektromagnetischen Antwortsignalen, welche jeweils von RFID-Transpondereinheiten (TP1,..., TP5) in Reaktion auf das ausgesandte Signal erzeugt werden, mittels der RFID-Leseeinheit;
Analysieren eines zeitlichen Verlaufs einer Phasenlage der Antwortsignale bei einem Zugriff auf ein Fach des Lagersystems, um daraus die dem Fach zugeordnete RFID-Transpondereinheit (TP1,..., TP5) aus der Mehrzahl von RFID-Transpondereinheiten (TP1,..., TP5) zu identifizieren; wobei die RFID-Leseeinheit bzw. eine Antenne der RFID-Leseeinheit bei dem Zugriff relativ zu den Fächern des Lagersystems bzw. den RFID-Transpondereinheiten (TP1,..., TP5) bewegt wird;
wobei das Analysieren des zeitlichen Verlaufs der Phasenlage der Mehrzahl der Antwortsignale jeweils ein Bestimmen eines Umkehrpunktes bei dem Zugriff und ein Vergleichen einer Phasendifferenz zwischen dem Umkehrpunkt und einem extremalen Phasenwert umfasst, und;
Bestimmen der dem Fach, auf welches zugegriffen wird, zugeordneten RFID-Transpondereinheit (TP1, ..., TP5) als diejenige RFID-Transpondereinheit (TP1, ..., TP5) aus der Mehrzahl von RFID-Transpondereinheiten (TP1, ..., TP5), deren Signal die größte Phasendifferenz zwischen dem Umkehrpunkt und dem extremalen Phasenwert aufweist.

2. Verfahren zum Identifizieren eines Zugriffs auf Fächer eines Lagersystems, denen jeweils RFID-Transpondereinheiten (TP1,..., TP5) zugeordnet sind, mit folgenden Schritten:
Aussenden eines elektromagnetischen Signals mittels einer tragbaren RFID-Leseeinheit; und Erfassen einer Mehrzahl von elektromagnetischen Antwortsignalen, welche jeweils von RFID-Transpondereinheiten (TP1,..., TP5) in Reaktion auf das ausgesandte Signal erzeugt werden, mittels der RFID-Leseeinheit;
Analysieren eines zeitlichen Verlaufs einer Phasenlage der Antwortsignale bei einem Zugriff auf ein Fach des Lagersystems, um daraus die dem Fach zugeordnete RFID-Transpondereinheit (TP1,..., TP5) aus der Mehrzahl von RFID-Transpondereinheiten (TP1,..., TP5) zu identifizieren; wobei die RFID-Leseeinheit bzw. eine Antenne der RFID-Leseeinheit bei dem Zugriff relativ zu den Fächern des Lagersystems bzw. den RFID-Transpondereinheiten (TP1,..., TP5) bewegt wird;
wobei das Anlaysieren des zeitlichen Verlaufs der Phasenlage der Antwortsignale ein Erfassen eines lokalen Extremums und ein Erfassen einer Krümmung des zeitlichen Verlaufs der Phasenlage umfasst; und
Bestimmen der dem Fach, auf welches zugegriffen wird, zugeordneten RFID-Transpondereinheit (TP1, ..., TP5) als diejenige RFID-Transpondereinheit (TP1, ..., TP5) aus der Mehrzahl von RFID-Transpondereinheiten (TP1, ..., TP5), deren Antwortsignal im Bereich des lokalen Extremums eine größte Krümmung aufweist.

3. Verfahren nach Anspruch 1 oder 2, bei welchem das Analysieren des zeitlichen Verlaufs der Phasenlage ein Vergleichen der zeitlichen Variation der Phasenlage der Mehrzahl von Antwortsignalen bei dem Zugriff auf das Fach umfasst.

4. Verfahren nach einem der vorangehenden Ansprüche, bei welchem das Analysieren des zeitlichen Verlaufs der Phasenlage ein Bestimmen eines Abstandes zwischen der RFID-Leseeinheit und den jeweiligen RFID-Transpondereinheiten (TP1,..., TP5) umfasst.

5. Verfahren nach einem der vorangehenden Ansprüche mit einem Bestimmen einer Höhenposition der RFID-Leseeinheit, wobei das Bestimmen der Höhenposition vorzugsweise ein Erfassen eines Luftdrucks umfasst.

6. Verfahren nach einem der vorangehenden Ansprüche mit einem Bestimmen einer Raumorientierung der RFID-Leseeinheit, wobei das Bestimmen der Raumorientierung vorzugsweise ein Erfassen eines magnetischen Feldes, insbesondere des Erdmagnetfeldes, umfasst.

7. Verfahren nach einem der vorangehenden Ansprüche mit dem Schritt eines Identifizierens eines Bewegungsmusters einer Person bei dem Zugriff auf das Fach, und/oder
mit dem Schritt eines Identifizierens einer Greifbewegung einer Person bei dem Zugriff auf das Fach,
wobei das Identifizieren des Bewegungsmusters bzw. der Greifbewegung vorzugsweise das Erfassen von Muskelimpulsen und/oder Sehnenimpulsen umfasst, und/oder
wobei das Identifizieren des Bewegungsmusters bzw. der Greifbewegung vorzugsweise das Erfassen einer Linearbeschleunigung und/oder einer Rotationsbeschleunigung umfasst.

8. Verfahren nach Anspruch 7, bei welchem das Identifizieren der Greifbewegung das Erfassen einer Fingerkrümmung umfasst, wobei das Erfassen der Fingerkrümmung vorzugsweise eine Streulichtdetektion und/oder eine Magnetfelddetektion und/oder eine Beschleunigungsdetektion umfasst, und/oder
mit dem Schritt des Bestimmens einer räumlichen Orientierung der RFID-Leseeinheit durch Analysieren des Bewegungsmusters bzw. der Greifbewegung.

9. Verfahren nach Anspruch 7 oder 8, bei welchem das Aussenden des elektromagnetischen Signals und/oder das Erfassen der elektromagnetischen Antwortsignale in Abhängigkeit von dem Identifizieren des Bewegungsmusters bzw. der Greifbewegung erfolgt.

10. Vorrichtung zum Identifizieren eines Zugriffs auf Fächer eines Lagersystems, denen jeweils RFID-Transpondereinheiten (TP1,..., TP5) zugeordnet sind, wobei die Vorrichtung eine tragbare RFID-Leseeinheit umfasst und dazu eingerichtet ist, ein elektromagnetisches Signal auszusenden;
wobei die Vorrichtung dazu eingerichtet ist, eine Phasenlage einer Mehrzahl von elektromagnetischen Antwortsignalen, welche jeweils von RFID-Transpondereinheiten (TP1,..., TP5) in Reaktion auf das ausgesandte Signal erzeugt werden, zu erfassen und aus einem zeitlichen Verlauf der Phasenlage der Antwortsignale bei einem Zugriff auf ein Fach des Lagersystems die dem Fach zugeordnete RFID-Transpondereinheit aus der Mehrzahl von RFID-Transpondereinheiten zu identifizieren;
wobei die RFID-Leseeinheit bzw. eine Antenne der RFID-Leseeinheit bei dem Zugriff relativ zu den Fächern des Lagersystems bzw. den RFID-Transpondereinheiten (TP1,..., TP5) bewegt wird; und
wobei die Vorrichtung dazu eingerichtet ist, aus dem zeitlichen Verlauf der Phasenlage der Mehrzahl der Antwortsignale bei dem Zugriff jeweils einen Umkehrpunkt zu bestimmen und eine Phasendifferenz zwischen dem Umkehrpunkt und einem extremalen Phasenwert zu vergleichen und die dem Fach, auf welches zugegriffen wird, zugeordnete RFID-Transpondereinheit (TP1, ..., TP5) als diejenige RFID-Transpondereinheit (TP1, ..., TP5) aus der Mehrzahl von RFID-Transpondereinheiten (TP1, ..., TP5) zu bestimmen, deren Signal die größte Phasendifferenz zwischen dem Umkehrpunkt und dem extremalen Phasenwert aufweist.

11. Vorrichtung zum Identifizieren eines Zugriffs auf Fächer eines Lagersystems, denen jeweils RFID-Transpondereinheiten (TP1, ... TP5) zugeordnet sind, wobei die Vorrichtung eine tragbare RFID-Leseeinheit umfasst und dazu eingerichtet ist, ein elektromagnetisches Signal auszusenden;
wobei die Vorrichtung dazu eingerichtet ist, eine Phasenlage einer Mehrzahl von elektromagnetischen Antwortsignalen, welche jeweils von RFID-Transpondereinheiten in Reaktion auf das ausgesandte Signal erzeugt werden, zu erfassen und aus einem zeitlichen Verlauf der Phasenlage der Antwortsignale bei einem Zugriff auf ein Fach des Lagersystems die dem Fach zugeordnete RFID-Transpondereinheit aus der Mehrzahl von RFID-Transpondereinheiten zu identifizieren;
wobei die RFID-Leseeinheit bzw. eine Antenne der RFID-Leseeinheit bei dem Zugriff relativ zu den Fächern des Lagersystems bzw. den RFID-Transpondereinheiten (TP1, ..., TP5) bewegt wird; und
wobei die Vorrichtung dazu einrichtet ist, ein lokales Extremum und eine Krümmung des zeitlichen Verlaufs der Phasenlage zu erfassen und die dem Fach, auf welches zugegriffen wird, zugeordnete RFID-Transpondereinheit (TP1, ..., TP5) als diejenige RFID-Transpondereinheit (TP1, ..., TP5) aus der Mehrzahl von RFID-Transpondereinheiten (TP1, ..., TP5) zu bestimmen, deren Antwortsignal im Bereich des lokalen Extremums eine größte Krümmung aufweist.

12. Vorrichtung nach Anspruch 10 oder 11, bei welcher die Vorrichtung dazu eingerichtet ist, die zeitliche Variation der Phasenlage der Mehrzahl der Antwortsignale zu vergleichen.

13. Vorrichtung nach einem der Ansprüche 10 bis 12, bei welcher die Vorrichtung eine Bewegungsdetektoreinheit umfasst, welche dazu eingerichtet ist, an einer Person befestigt zu werden und ein Bewegungsmuster der Person bei dem Zugriff auf das Fach zu identifizieren.

## Claims

1. A method to identify an access to compartments of a storage system to which RFID transponder units (TP1, ..., TP5) are assigned, the method comprising the following steps:
emitting an electromagnetic signal by means of a portable RFID reader unit; and detecting a plurality of electromagnetic response signals by means of the RFID reader unit, wherein the electromagnetic response signals are generated by RFID transponder units (TP1, ..., TP5) respectively in reaction to the emitted signal;
analyzing a temporal progression of a phase of the response signals in the case of an access to a compartment of the storage system in order to identify, out of the plurality of RFID transponder units (TP1, ..., TP5), the RFID transponder unit (TP 1, ..., TP5) assigned to the compartment; wherein the RFID reader unit or an antenna of the RFID reader unit is moved relative to the compartments of the storage system or the RFID transponder units (TP1, ..., TP5) during the access;
wherein the analyzing of the temporal progression of the phase of the plurality of response signals comprises determining a reversal point during the access and comparing a phase difference between the reversal point and an extremal phase value respectively, and;
determining the RFID transponder unit (TP 1, ..., TP5) assigned to the compartment that is accessed as the RFID transponder unit (TP1, ..., TP5) among the plurality of transponder units (TP1, ..., TP5) whose signal has the greatest phase difference between the reversal point and the extremal phase value.

2. A method to identify an access to compartments of a storage system to which RFID transponder units (TP1, ..., TP5) are assigned, the method comprising the following steps:
emitting an electromagnetic signal by means of a portable RFID reader unit; and detecting a plurality of electromagnetic response signals by means of the RFID reader unit, wherein the electromagnetic response signals are generated by RFID transponder units (TP1, ..., TP5) respectively in reaction to the emitted signal;
analyzing a temporal progression of a phase of the response signals in the case of an access to a compartment of the storage system in order to identify, out of the plurality of RFID transponder units (TP1, ..., TP5), the RFID transponder unit (TP1, ..., TP5) assigned to the compartment; wherein the RFID reader unit or an antenna of the RFID reader unit is moved relative to the compartments of the storage system or the RFID transponder units (TP1, ..., TP5) during the access;
wherein the analyzing of the temporal progression of the phase of the response signals comprises detecting a local extremum and detecting a curvature of the temporal progression of the phase; and
determining the RFID transponder unit (TP1, ..., TP5) assigned to the compartment that is accessed as the RFID transponder unit (TP1, ..., TP5) from the plurality of transponder units (TP1, ..., TP5) whose signal has a greatest curvature within the range of the local extremum.

3. The method according to claim 1 or 2, where the analyzing of the temporal progression of the phase comprises comparing the temporal variation of the phase of the plurality of the response signals when accessing the compartment.

4. The method according to one of the preceding claims, where the analyzing of the temporal progression of the phase comprises determining a distance between the RFID reader unit and the respective RFID transponder units (TP1, ..., TP5) .

5. The method according to one of the preceding claims, comprising determining a height position of the RFID reader unit, wherein the determining the height position preferably comprises detecting an air pressure.

6. The method according to one of the preceding claims, comprising determining a spatial orientation of the RFID reader unit, wherein the determining the spatial orientation preferably comprises detecting a magnetic field, in particular the Earth's magnetic field.

7. The method according to one of the preceding claims with the step of identifying a movement pattern of a person when the compartment is accessed, and/or
with the step of identifying a gripping movement of a person when accessing the compartment;
wherein the identifying the movement pattern or the gripping movement, respectively, preferably comprises detecting muscle impulses and/or tendon impulses, and/or
wherein the identifying the movement pattern or the gripping movement, respectively, preferably comprises detecting a linear acceleration and/or a rotation acceleration.

8. The method according to claim 7, wherein the identifying the gripping movement comprises detecting a bending finger, wherein the detecting the bending finger preferably comprises a scattered light detection and/or a magnetic field detection and/or an acceleration detection, and/or
with the step of determining a spatial orientation of the RFID reader unit by analysing the movement pattern or the gripping pattern, respectively.

9. The method according to claim 7 or 8, wherein the emitting the electromagnetic signal and/or the detecting the electromagnetic response signals takes place depending on the identifying the movement pattern or the gripping movement, respectively.

10. An apparatus to identify an access to compartments of a storage system to which RFID transponder units (TP1, ..., TP5) are assigned, wherein the apparatus comprises a portable RFID reader unit and is adapted to emit an electromagnetic signal;
wherein the apparatus is adapted to detect a phase of a plurality of electromagnetic response signals which are respectively generated by RFID transponder units (TP1, ..., TP5) in reaction to the emitted signal, and to identify, from a temporal progression of the phase of the response signals during an access to a compartment, the RFID transponder unit assigned to the compartment from the plurality of RFID transponder units;
wherein the RFID reader unit or an antenna of the RFID reader unit is moved relative to the compartments of the storage system or the RFID transponder units (TP1, ..., TP5) during the access; and
wherein the apparatus is adapted to determine a reversal point from the temporal progression of the phase of the plurality of response signals during the access and to compare a phase difference between the reversal point and an extremal phase value and to determine the RFID transponder unit (TP1, ..., TP5) assigned to the compartment that is accessed as the RFID transponder unit (TP1, ..., TP5) from the plurality of RFID transponder units (TP1, ..., TP5) whose signal has the greatest phase difference between the reversal point and the extremal phase value.

11. An apparatus to identify an access to compartments of a storage system to which RFID transponder units (TP1, ..., TP5) are assigned, wherein the apparatus comprises a portable RFID reader unit and is adapted to emit an electromagnetic signal;
wherein the apparatus is adapted to detect a phase of a plurality of electromagnetic response signals which are respectively generated by RFID transponder units in reaction to the emitted signal, and to identify, from a temporal progression of the phase of the response signals during an access to a compartment, the RFID transponder unit assigned to the compartment from the plurality of RFID transponder units;
wherein the RFID reader unit or an antenna of the RFID reader unit is moved relative to the compartments of the storage system or the RFID transponder units (TP1, ..., TP5) during the access; and
wherein the apparatus is adapted to detect a local extremum and a curvature of the temporal progression of the phase and to determine the RFID transponder unit (TP1, ..., TP5) assigned to the compartment that is accessed as the RFID transponder unit (TP1, ..., TP5) out of the plurality of RFID transponder units (TP1, ..., TP5) whose response signal has a greatest curvature within the range of the local extremum.

12. The apparatus according to claim 10 or 11, where the apparatus is adapted to compare the temporal variation of the phase of the plurality of response signals.

13. The apparatus according to one of the claims 10 to 12,
wherein the apparatus comprises a movement detector unit which is adapted to be attached to a person and to identify a movement pattern of the person when accessing the compartment.

## Revendications

1. Procédé d'identification d'un accès à des compartiments d'un système de stockage, auxquels correspondent des unités de transpondeurs RFID (TP1..., TP5), avec les étapes suivantes :
envoi d'un signal électromagnétique au moyen d'une unité de lecture RFID portable ; et
détection d'une pluralité de signaux de réponse électromagnétiques qui sont générés chacun par les unités de transpondeurs RFID (TP1..., TP5) en réaction au signal envoyé, au moyen de l'unité de lecture RFID ;
analyse de l'évolution dans le temps d'une phase des signaux de réponse lors d'un accès à un compartiment du système de stockage, afin d'identifier les unités de transpondeurs RFID (TP1..., TP5) correspondant au compartiment, parmi la pluralité d'unités de transpondeurs RFID (TP1..., TP5) ; l'unité de lecture RFID ou une antenne de l'unité de lecture RFID étant déplacée, lors de l'accès, par rapport aux compartiments du système de stockage ou aux unités de transpondeurs RFID (TP1..., TP5) ;
l'analyse de l'évolution dans le temps de la phase de la pluralité de signaux de réponse comprenant une détermination d'un point d'inflexion lors de l'accès et une comparaison d'une différence de phase entre le point d'inflexion et une valeur de phase extrême ; et
détermination de l'unité de transpondeur RFID (TP1..., TP5) correspondant au compartiment auquel on accède comme étant l'unité de transpondeur RFID (TP1..., TP5), parmi la pluralité d'unités de transpondeurs RFID (TP1..., TP5), dont le signal présente la différence de phase la plus grande entre le point d'inflexion et la valeur de phase extrême.

2. Procédé d'identification d'un accès à des compartiments d'un système de stockage, auxquels correspondent des unités de transpondeurs RFID (TP1..., TP5), avec les étapes suivantes :
envoi d'un signal électromagnétique au moyen d'une unité de lecture RFID portable ; et
détection d'une pluralité de signaux de réponse électromagnétiques qui sont générés chacun par les unités de transpondeurs RFID (TP1..., TP5) en réaction au signal envoyé, au moyen de l'unité de lecture RFID ;
analyse de l'évolution dans le temps d'une phase des signaux de réponse lors d'un accès à un compartiment du système de stockage, afin d'identifier les unités de transpondeurs RFID (TP1..., TP5) correspondant au compartiment, parmi la pluralité d'unités de transpondeurs RFID (TP1..., TP5) ; l'unité de lecture RFID ou une antenne de l'unité de lecture RFID étant déplacée, lors de l'accès, par rapport aux compartiments du système de stockage ou aux unités de transpondeurs RFID (TP1..., TP5) ;
l'analyse de l'évolution dans le temps de la phase des signaux de réponse comprenant une détection d'un extremum local et une détection d'une courbure de l'évolution de la phase en fonction du temps ; et
détermination de l'unité de transpondeur RFID (TP1..., TP5) correspondant au compartiment auquel on accède comme étant l'unité de transpondeur RFID (TP1..., TP5), parmi la pluralité d'unités de transpondeurs RFID (TP1..., TP5), dont le signal de réponse présente, au niveau de l'extremum local, la courbure la plus importante.

3. Procédé selon la revendication 1 ou 2, dans lequel l'analyse de l'évolution dans le temps de la phase comprend une comparaison de la variation dans le temps de la phase de la pluralité de signaux de réponse lors de l'accès au compartiment.

4. Procédé l'une des revendications précédentes, dans lequel l'analyse de l'évolution dans le temps de la phase comprend une détermination d'une distance entre l'unité de lecture RFID et les unités de transpondeurs RFID (TP1..., TP5) correspondantes.

5. Procédé selon l'une des revendications précédentes, avec une détermination d'une position en hauteur de l'unité de lecture RFID, la détermination de la position en hauteur comprenant une mesure de la pression d'air.

6. Procédé selon l'une des revendications précédentes, avec une détermination d'une orientation spatiale de l'unité de lecture RFID, la détermination de l'orientation spatiale comprenant de préférence une mesure d'un champ magnétique, plus particulièrement du champ magnétique terrestre.

7. Procédé selon l'une des revendications précédentes, avec une étape d'identification d'un modèle de déplacement d'une personne lors de l'accès au compartiment et/ou
avec une étape d'identification d'un mouvement de préhension d'une personne lors de l'accès au compartiment,
l'identification du modèle de déplacement ou du mouvement de préhension comprenant de préférence la détection d'impulsions musculaires et/ou d'impulsions des tendons et/ou
l'identification du modèle de déplacement ou du mouvement de préhension comprenant de préférence la détection d'une accélération linéaire et/ou d'une accélération de rotation.

8. Procédé selon la revendication 7, dans lequel l'identification du mouvement de préhension comprend la détection d'une courbure des doigts, la détection de la courbure des doigts comprenant de préférence une détection de lumière diffusée et/ou une détection de champ magnétique et/ou une détection d'accélération et/ou
avec une étape de détermination d'une orientation spatiale de l'unité de lecture RFID par l'analyse du modèle de mouvement ou du mouvement de préhension.

9. Procédé selon la revendication 7 ou 8, dans lequel l'envoi du signal électromagnétique et/ou la détection des signaux de réponse électromagnétiques a lieu en fonction de l'identification du modèle de mouvement ou du mouvement de préhension.

10. Dispositif d'identification d'un accès à des compartiments d'un système de stockage, auxquels correspondent des unités de transpondeurs RFID (TP1..., TP5), le dispositif comprenant une unité de lecture RFOD portable et étant conçu pour émettre un signal électromagnétique ;
le dispositif étant conçu pour mesurer une phase d'une pluralité de signaux de réponse électromagnétiques, qui sont générés chacun par des unités de transpondeurs RFID (TP1..., TP5) en réaction au signal émis, et pour identifier, à parti d'une évolution dans le temps de la phase des signaux de réponse lors d'un accès à un compartiment du système de stockage, l'unité de transpondeur RFID correspondant au compartiment parmi la pluralité d'unités de transpondeurs RFID ;
l'unité de lecture RFID ou une antenne de l'unité de lecture RFID étant déplacée par rapport aux compartiments du système de stockage ou aux unités de transpondeurs RFID (TP1..., TP5) lors d'un accès ; et
le dispositif étant conçu pour déterminer, à partir de l'évolution dans le temps de la phase de la pluralité de signaux de réponse lors de l'accès, un point d'inflexion et pour comparer une différence de phase entre le point d'inflexion et une valeur de phase extrême et déterminer, parmi la pluralité d'unités de transpondeurs RFID (TP1..., TP5), l'unité de transpondeur RFID (TP1..., TP5) correspondant au compartiment auquel on accède, comme étant l'unité de transpondeur RFID (TP1..., TP5) dont le signal présente la différence de phase la plus importante entre le point d'inflexion et la valeur de phase extrême.

11. Dispositif d'identification d'un accès à des compartiments d'un système de stockage, auxquels correspondent des unités de transpondeurs RFID (TP1..., TP5), le dispositif comprenant une unité de lecture RFOD portable et étant conçu pour émettre un signal électromagnétique ;
le dispositif étant conçu pour mesurer une phase d'une pluralité de signaux de réponse électromagnétiques, qui sont générés chacun par des unités de transpondeurs RFID (TP1..., TP5) en réaction au signal émis, et pour déterminer, à partir d'une évolution dans le temps de la phase des signaux de réponse lors d'un accès à un compartiment du système de stockage, l'unité de transpondeur RFID correspondant au compartiment parmi la pluralité d'unités de transpondeurs ;
l'unité de lecture RFIDF ou une antenne de l'unité de lecture RFID étant déplacée par rapport aux compartiments du système de stockage ou aux unités de transpondeurs RFID (TP1..., TP5) lors d'un accès ; et
le dispositif étant conçu pour mesurer un extremum local et une courbure de l'évolution dans le temps de la phase et déterminer, parmi la pluralité d'unités de transpondeurs RFID (TP1..., TP5), l'unité de transpondeur RFID (TP1..., TP5), correspondant au compartiment auquel on accède, comme étant l'unité de transpondeur RFID (TP1..., TP5) dont le signal de réponse présente, au niveau de l'extremum local, la courbure la plus importante.

12. Dispositif selon la revendication 10 ou 11, dans lequel le dispositif est conçu pour comparer la variation dans le temps de la pluralité de signaux de réponse.

13. Dispositif selon l'une des revendications 10 à 12, dans lequel le dispositif comprend une unité de détection de mouvement, qui est conçue pour être fixée à une personne et pour identifier un modèle de mouvement de la personne lors de l'accès au compartiment.
